# EUROPÄISCHE PATENTSCHRIFT

(11) **EP 3 894 720 B1**
(45) Veröffentlichungstag und Bekanntmachung des Hinweises auf die Patenterteilung: **08.06.2022**
(21) Anmeldenummer: 20704781.2
(22) Anmeldetag: 22.01.2020
(51) Int. Cl.: F16G 13/16, H02G 11/00

(54) **BETRIEBSFEST AUSGELEGTE SEITENLASCHE FÜR EINE ENERGIEFÜHRUNGSKETTE**
OPERATIONALLY STABLE SIDE PLATE FOR AN ENERGY CHAIN
MAILLON LATÉRAL DE CHAÎNE PORTE-CÂBLES DE CONCEPTION RÉSISTANTE AU FONCTIONNEMENT

(30) Priorität: 25.01.2019 DE 202019100465 U
(43) Veröffentlichungstag der Anmeldung: 20.10.2021
(73) Patentinhaber: Igus GmbH, 51147 Köln (DE)
(72) Erfinder: HERMEY, Andreas, 53773 Hennef (DE); JAEKER, Thilo-Alexander, 53757 Sankt Augustin (DE); THEISS, Georg, 50678 Köln (DE); STRACK, Stefan, 53639 Königswinter (DE)
(74) Vertreter: Lippert Stachow Patentanwälte Rechtsanwälte
(86) Internationale Anmeldenummer: PCT/EP2020/051520
(87) Internationale Veröffentlichungsnummer: WO 2020/152221

(56) Entgegenhaltungen:
- DE-A1- 3 139 735
- DE-A1-102008 060 466

## Beschreibung

Die Erfindung betrifft allgemein eine Seitenlasche für eine Energieführungskette. Energieführungsketten dienen zur dynamischen und geschützten Führung flexibler Leitungen, wie Schläuchen, Kabeln oder dgl., zwischen zwei relativbeweglichen Anschlussstellen. Energieführungsketten werden aus Kettengliedern hergestellt, die typisch je zwei gegenüberliegende Seitenlaschen umfassen, die über einen Quersteg oder zwei gegenüberliegende Querstege miteinander fest oder lösbar verbunden sind. Der Laschenkörper gattungsgemäßer Seitenlaschen hat zwei Überlappungsbereiche, jeweils zur schwenkbaren bzw. gelenkigen Verbindung mit einem korrespondierenden Überlappungsbereich einer angrenzenden Lasche, und einen Mittelbereich dazwischen.

Bekannt sind Energieführungsketten mit Seitenlaschen aus umgeformten Prägeteilen aus Metallblech. So beschreibt z.B. DE 31 39 735 A1 Kettenglieder mit je zwei gegenüberliegenden, gabelförmigen Kettenlaschen die über Querstege miteinander verbunden sind. Die Kettenlaschen bestehen aus zwei Seitenlaschen die jeweils als flächige Blechprägeteile hergestellt sind. Jede der beiden Seitenlaschen hat hierbei einen einstückigen Laschenkörper aus Blech, z.B. typisch Stahlblech, mit zwei Überlappungsbereichen zur schwenkbaren Verbindung mit einem korrespondierenden Überlappungsbereich einer angrenzenden Kettenlasche, und mit einem Mittelbereich zwischen den Überlappungsbereichen. Die beiden Überlappungsbereiche bzw. Endbereiche der beiden Seitenlaschen sind zueinander entgegengesetzt gekröpft bzw. seitlich versetzt, gemäß DE 31 39 735 A1 um die Dicke der Kettenlasche. Zwischen den Überlappungsbereichen und dem Mittelbereich befinden sich Querschnittsübergänge welche, etwa durch einen Umformprozess zur Herstellung eines seitlichen Versatzes bzw. der gewünschten Kröpfung, gerundet ausgeführt sind.

Eine weitere Bauweise einer Seitenlasche aus Metallblech ist aus WO 2007 118 574 A1 bekannt, auch hier sind Querschnittsübergänge zwischen gekröpften Überlappungsbereiche an den Außenflächen gerundet ausgeführt durch Herstellung in einem Umformverfahren. Seitenlaschen aus Metallblech haben eine hohe Festigkeit, insbesondere Zugfestigkeit. Die Geometrie einer Seitenlasche wird stets u.a. abhängig vom jeweiligen Werkstoff und vom Herstellungsprozess gewählt.

Bewährt haben sich ferner Energieführungsketten mit Seitenlaschen, die einen einstückigen, flächigen Laschenkörper aus Kunststoff aufweisen. Seitenlaschen aus Kunststoff ermöglichen u.a. eine deutliche Gewichtsreduzierung im Vergleich zu Blechlaschen.

Häufig werden zwei Typen von Kunststoff-Seitenlaschen verwendet: komplementäre Innen- und Außenlaschen, die in Längsrichtung alternierend miteinander zu einem Laschenstrang verbunden werden, wie z.B. in WO 95/04231 A1 beschrieben, oder aber in Draufsicht gekröpfte Seitenlaschen, wie z.B. im DE 3 531 066 C2 bzw. US 4,813,224 A beschrieben. Beide Laschentypen können jeweils kostengünstig in Spritzgusstechnik hergestellt werden.

Bei beiden Typen haben die Seitenlaschen jeweils am Überlappungsbereich und/oder Mittelbereich eine Anzahl Querschnittsübergänge, jeweils zwischen zwei Teilbereichen äußerer Flächen, da diese funktionsbedingt in einem Winkel, insbesondere senkrecht, zueinander stehen bzw. verlaufen.

Es ist gängige Praxis bestimmte dieser Querschnittsübergänge gerundet herzustellen, insbesondere um schafkantige Übergänge zu vermeiden bzw. Kanten zu entschärfen. Gerundet werden bspw. Übergänge von den großen Seitenflächen zu den Schmalseiten, etwa um Störkanten zu vermeiden, oder die freien Stirnenden der Schwenkzapfen, um den Zusammenbau zu erleichtern. Die Verrundung von Querschnittsübergängen erfolgt typisch als Radienübergang mit kleinem Radius in Form eines Viertelkreisbogens, welcher symmetrisch zu den Teilflächen angelegt wird.

Ungeachtet der Bauform werden Seitenlaschen im Betrieb der Energieführungskette, insbesondere bei großen Führungslängen bzw. Verfahrwegen und/oder hohen Geschwindigkeiten, sehr hohen Kräften ausgesetzt. Solche Kräfte entstehend u.a. durch die zur Bewegung notwendige Zugraftübertragung, aber z.B. auch an den Anschlägen zur Begrenzung der Schwenkwinkel, etwa in freitragenden Anwendungen (mit einem Obertrum selbstragend im Abstand über einem Untertrum) oder im Umlenkbogen zwischen den Kettentrumen. Die Beanspruchung bzw. Belastung der Seitenlaschen ist dabei wegen dem Hin- und Herfahren des bewegten Trums grundsätzlich dynamisch und oft mit hohem Takt wiederholend, meist zyklisch. In solchen Fällen besteht erhöhte Gefahr von Ermüdungsschäden durch Lastwechsel.

Ermüdungsschwachstellen werden in der Praxis meist behoben durch dauerfeste Auslegung mit geeignet erhöhter Wandstärke bzw. Materialdicke im kritischen Bereich der Seitenlaschen. Dies führt jedoch zur höheren Materialkosten und höherem Eigengewicht der Energiekette. Dieser Ansatz ist nicht optimal, auch weil im Betrieb zu übertragende Kräfte mit dem Gewicht steigen.

Die vorgenannten Radienübergänge oder auch z.B. verrundet verbundene Liniensegmente als Querschnittsübergänge können - wenngleich hierzu bisher selten eingesetzt - theoretisch an einem Lastaufnahmebereich eine gewisse Verringerung von Spannungsspitzen bzw. Kerbspannungen im Laschenkörpers bewirken und damit die Gefahr von Ermüdungsschäden mindern.

Wie Langzeituntersuchungen im Versuchslabor der Anmelderin zeigen, können Seitenlaschen auch an herkömmlichen verrundeten Querschnittsübergänge, vermutlich aufgrund verbleibender Kerbwirkung bzw. Materialspannungen, nach einer hohen Grenzzahl von Lastwechseln versagen. Dies tritt auch bei Lasten weit unter der statischen Festigkeit bzw. Belastbarkeit auf und z.T. bevor andere scharfkantige Übergänge im Kraftfluss versagen. Demnach erscheinen die üblichen Kreisradienübergänge nicht optimal.

Eine erste Aufgabe der vorliegenden Erfindung liegt mithin darin, gattungsgemäße Kunststoff-Seitenlaschen für Energieführungsketten ohne Überdimensionierung bzw. die Notwendigkeit einer festeren Auslegung durch zusätzliches Material so weiterzubilden, dass diese dennoch erhöhte Betriebsfestigkeit (Engl. fatigue strength) aufweisen. Zudem soll die Möglichkeit eröffnet werden für weitergehende Gewichtsersparnis durch Reduzierung der Wandstärken bzw. der Kunststoffmasse in der Seitenlasche.

Erfindungsgemäß wird dazu ein speziell geformter Querschnittsübergang an mindestens einem bestimmungsgemäß zur Lastaufnahme dienenden und als kritisch ermittelten Bereich mit einer ersten und einer zweiten Teilfläche des Laschenkörpers vorgesehen, sei es an den Überlappungsbereichen, am Mittelbereich, oder am Übergang zwischen Überlappungsbereich und Mittelbereich. Hierzu wird vorgeschlagen, dass dieser ausgewählte Querschnittsübergang definiert wird durch eine einhüllende Übergangskurve mit einem speziellen Verlauf, wobei die Querschnittsfläche des Querschnittsübergangs entlang der Übergangskurve vom Startpunkt zum Endpunkt stetig abnimmt, insbesondere monoton fallend (im Sinne der entsprechenden Kurvenfunktion). Der erfindungsgemäße Verlauf der Übergangskurve ist so eingestellt, dass für einen ausgewählten Startpunkt der Übergangskurve in bzw. auf der ersten Teilfläche, welcher in einem Abstand A zur gedachten Schnittkurve der ersten Teilfläche mit der zweiten Teilfläche liegt, der Kurvenendpunkt in bzw. auf der zweiten Teilfläche in einem vorbestimmten, größeren Abstand Z zu dieser Schnittkurve liegt, nämlich einem Abstand Z mit 1,7 · A ≤ Z ≤ 4,0 · A, insbesondere mit 2,3 · A ≤ Z ≤ 3,4 · A.

Kurz gefasst wird also der Übergang im Querschnitt entsprechend einer monoton fallenden Kurve gestaltet, welche erfindungsgemäß so gewählt bzw. konstruiert ist, dass deren Endpunktabstand Z zur Schnittkurve beider angrenzender Flächen deutlich größer ist als ihr entsprechender Startpunktabstand A, nämlich insbesondere im Bereich 1,7 ≤ Z/A ≤ 4,0.

Ein derartiger Querschnittsübergang ist hinsichtlich Ermüdungsschäden, insbesondere kraftflussbedingter örtlicher Spannungskonzentrationen bzw. Spannungsspitzen deutlich günstiger als konventionell angelegte Viertelkreis-Rundungsradien. Der Querschnittsübergang kann skaliert an beliebige Bauräume bzw. Randbedingungen angepasst werden. Bei ebenen Flächen entspricht die Schnittkurve, zu welcher der Abstand von Anfangs- und Endpunkt betrachtet wird, einer Schnittgeraden. Bei anderen Flächenpaaren, z.B. mit einer zylindrischen Schwenkzapfenfläche oder einer in der Laschenebene kurvenförmiger Übergangsfläche, ist die Schnittkurve hingegen keine Gerade. Die einhüllende Übergangskurve ist vorzugsweise entlang des Querschnittsübergangs zumindest bereichsweise oder überwiegend gleichbleibend, d.h. eine Einhüllende bzw. Hüllkurve zur Außenfläche des Querschnittsübergangs.

Besonders günstig erweist sich, wenn die Übergangskurve im Sinne einer Funktionsanalyse bzw. mathematisch einer glatten bzw. stufenlosen und streng monoton fallenden Kurve entspricht. Der Krümmungsradius kann zumindest bereichsweise entlang der Kurve konstant sein. Es kann auch eine bereichsweise oder vollständig krümmungsstetige Kurve mit Startpunktabstand A und Endpunktabstand Z im Verhältnisbereich 1,7 ≤ Z/A ≤ 4,0 angewendet werden.

Gemäß einem unabhängigen Aspekt betrifft die Erfindung ungeachtet des Abstandsverhältnisses Z/A auch einen Querschnittsübergang definiert durch eine Übergangskurve, die glatt (stufenlos) und streng monoton fallend ist und sich durch besondere Eigenschaften ihrer für den Kraftfluss relevanten Kurventangente bzw. Kurvensteigung (bzw. erste Ableitung bzw. Differentialquotient) entlang ihres Verlaufs auszeichnet. Erfindungsgemäß wird eine Übergangskurve gewählt, deren Kurventangente am Anfangspunkt (in Extremal-Betrachtung) die erste Fläche in einem Winkel von ca. 45° +/- 10°, insbesondere +/- 5°, schneidet und deren Kurventangente entlang des Kurvenverlaufs sich fortschreitend bzw. monoton in Richtung parallel zur zweiten Fläche dreht und am Endpunkt vorzugsweise nahezu (+/- 10°, vorzugsweise +/- 5°) oder technisch parallel zur zweiten Fläche liegt.

Die Übergangskurve kann mehrere stetig ineinander übergehende bspw. gerade Abschnitte umfassen, welche z.B. nach einer zur Entlastung von Kerbspannungen geeigneten Methode konstruiert sind,

Das Risiko von Anrissen bei dynamischer Belastung an erfindungsgemäßen Querschnittsübergängen wird mit der vorgeschlagenen Übergangskontur deutlich reduziert. Solche Anrisse könnten, wie aus der Metallwerkstoffkunde bekannt, auch bei vergleichsweise biegsameren Polymerkunststoffen unter Lastwechsel entstehen und bis zum Restbruch wachsen. Dementsprechend ermöglicht die Nutzung erfindungsgemäß geformter Querschnittsübergänge die Herstellung betriebsfest ausgelegter Seitenlasche, ohne zusätzlichen Materialaufwand. Es können insbesondere gegenüber bestehenden Gestaltungen von Seitenlaschen auch Materialeinsparungen erzielt werden indem unnötige Überdimensionierung vermieden bzw. gezielt behoben wird.

Insbesondere bei zur lediglich einseitigen Überlappung bestimmten Seitenlaschen, wie komplementären Innenlaschen und Außenlasche oder aber gekröpften Laschen, liegen kritische Bereiche erfahrungsgemäß dort wo Kräfte von einem primär in der Laschenhauptebene erstreckten Bereich in einen überwiegend senkrecht dazu erstreckten Bereich fließen. Vorzugsweise wird die Übergangskurve daher mit ihrem Startpunkt an bzw. in eine erste Teilfläche senkrecht zur Hauptebene der Seitenlasche gelegt, und entsprechend der Endpunkt in eine zweite Teilfläche parallel zur Hauptebene des Laschenkörpers. Erfindung kann grundsätzlich an allen hinsichtlich Ermüdungsschäden durch Lastwechsel kritischen Übergängen einer Seitenlasche angewendet werden. Untersuchungen zeigen jedoch zwei besonders anfällige Stellen mit denen sich nennenswerte Materialeinsparungen erzielen lassen.

Ein erste hinsichtlich Ermüdungsversagen kritische Stelle liegt am Übergang zwischen Überlappungsbereich und dem typischerweise dickeren Mittelbereich, d.h. in einer bevorzugten Ausführungsform liegt die erste Teilfläche mit dem Startpunkt am Mittelbereich und die zweite Teilfläche mit dem Endpunkt an einem Überlappungsbereich. Dabei kann der Querschnittsübergang also insbesondere am Übergang zwischen einer kleineren Wandstärke dieses Überlappungsbereichs und einer größeren Wandstärke des Mittelbereichs vorgesehen sein. Entsprechend kann am Stirnende der Seitenlaschen eine korrespondierende passende Kontur vorgesehen werden, um das erforderliche Bewegungsspiel zu gewährleisten.

Durch die Seitenlasche wird insbesondere bei langen Ketten und im mitnehmerseitigen ersten Drittel der Energieführungskette hohe Kraft, nämlich abwechselnd Zug- und Schubkraft, übertragen. Durch Wandstärkensprünge und/oder Seitenversatz der Überlappungsbereiche sind beide Übergänge zum Mittelbereich dabei ausgeprägten Belastungen ausgesetzt.

Eine zweite hinsichtlich Ermüdungsversagen kritische Stelle liegt in den Anschlagtaschen bzw. Anschlagausnehmungen, die Gegenanschläge für korrespondierende Anschlagvorsprünge der unmittelbar angrenzenden bzw. überlappenden Lasche bilden. In die Anschlagausnehmung greift ein Anschlagvorsprung ein um, typisch in beiden Schwenkrichtungen, den Schwenkwinkel zu begrenzen. Der Bodenübergang in Anschlagausnehmungen hat, wie Untersuchungen aufzeigen, insbesondere bei langen freitragenden Energieführungsketten erhöhtes Bruchrisiko. Dementsprechend ist es weiterhin besonders vorteilhaft wenn die erste Teilfläche mit dem Startpunkt eine anschlagswirksame Anschlagfläche einer Anschlagausnehmung in einem Überlappungsbereich darstellt, wobei die zweite Teilfläche mit dem Endpunkt eine die Anschlagausnehmung einseitig schließenden Bodenwand darstellt. Vorteilhaft ist dabei die Zusammenwirkung mit einer korrespondierenden Übergangskurve am zugehörigen Anschlagvorspung, sodass auch am Anschlagvorspung Spannungskonzentrationen bzw. Spannungsspitzen reduziert werden bzw. eine Materialeinsparung ermöglicht wird.

Weiterhin kann die vorgeschlagene Kontur des Querschnittsübergangs auch an anderen kraftübertragenden Bereichen der Seitenlasche eingesetzt werden, beispielsweise an der Gelenkverbindung der Seitenlaschen. Demnach sieht eine weitere Ausführungsform vor, dass erste Teilfläche mit dem Startpunkt an einem Schwenkzapfen im Überlappungsbereich und die zweite Teilfläche mit dem Endpunkt an einem Seitenwandbereich liegt, von dem der Schwenkzapfen vorsteht, wobei der Schwenkzapfen zur Gelenkverbindung dient und im Betrieb hohen Kräften senkrecht zur Schwenkachse ausgesetzt ist. Eine entsprechend konjugierte Kontur kann auch an der korrespondierenden Zapfenaufnahme vorgesehen sein, hier entstehen jedoch, abhängig von der Bauweise der Seitenlasche nicht zwingend Querkräfte.

Weiterhin liegt es im Rahmen der Erfindung die vorgeschlagene Übergangskurve an Materialaussparung, welche bspw. zur Gewichtsreduzierung und/oder ähnlich einer Entlastungskerbe zur Reduzierung von Spannungskonzentrationen bzw. -spitzen im Laschenkörper dienen vorzusehen. Dabei kann die erste Teilfläche mit dem Startpunkt an einer Außenfläche des Laschenkörpers und die zweite Teilfläche mit dem Endpunkt in der Materialaussparung liegen. Die Kombination des Querschnittsübergangs zwecks Minimierung von Spannungskonzentrationen mit derartigen Materialaussparung erlaubt Gewichtsreduzierungen ohne kritische Stabilitätsverluste und/oder eine Optimierung des Kraftflusses in der Seitenlasche, insbesondere eine Senkung von Kerbspannungen, wenn die Materialaussparung in Art einer Entlastungskerbe wirkt.

Selbstredend ist eine Anwendung des erfindungsgemäßen Querschnittsübergangs an nur einem der vorgenannten Flächenübergang oder aber kumulativ an mehreren dieser möglich. Auch an weiteren Bereiche des Laschenkörpers liegt eine vorteilhafte Anwendung des Querschnittsübergangs im Rahmen der Erfindung.

Eine in der computergestützten Produktentwicklung besonders einfache umzusetzende aber günstige Übergangskurve entspricht einem Kreissegment, insbesondere einem 45°-Kreissegment, d.h. einem "Achtelkreis". Dabei wird die Übergangskurve mit geeigneten konstantem Radius vorzugsweise so angelegt, dass der Endpunkt einem Abstand Z zur Schnittkurve mit 2,2 · A ≤ Z ≤ 2,6 · A liegt und der Konstruktionskreis für das Kreissegment, wie ein Oskulationskreis bzw. Krümmungskreis, tangential zur zweiten Fläche angelegt wird. Der zur zweiten Fläche tangentiale Konstruktionskreis der Übergangskurve kann insbesondere mit für ein Verhältnis Z/A=2,5 geeigneten Radius an die zweiten Fläche tangierend angelegt werden. Das gewünschte Verhältnis Z/A bestimmt den erforderlichen Radius des Kreissegments. Es ist ebenfalls möglich, andere geeignete Kurvenformen einzusetzen, welche z.B. in Bezug auf das vorstehend konstruierte 45°-Kreissegment, zwischen zwei beidseitigen Äquidistanten bzw. Parallelkurven im Abstand d = 0,1 · A zum 45°-Kreissegment mit Z/A = ca. 2,5 verlaufen.

Bevorzugt wird eine Übergangskurve die einer zumindest zwischen Startpunkt und Endpunkt der Kurve glatten und streng monoton fallenden Funktion entspricht, da hierdurch zwischen Start- und Endpunkt jegliche Sprünge bzw. Restkanten vermieden werden können. Geeignet sind hierzu bspw. trigonometrische Funktionen, insbesondere die Tangensfunktion.

Der Winkel zwischen der ersten äußeren Teilfläche und der zweiten äußeren Teilfläche des Laschenkörpers kann entlang des Querschnittsübergangs gleichbleibend 90° betragen, der Querschnittsübergangs kann jedoch auch an Flächen mit anderem Winkel zueinander angelegt werden, wobei vorteilhafte Wirkungen vor allem bei Winkeln α nahe 90° ggf. auch im Bereich 45° ≤ α ≤ 135° erzielt werden.

Bei im Wesentlichen senkrecht zueinander stehenden Flächen in kraftübertragenden Bereichen ist das Problem der Spannungskonzentrationen ausgeprägt. Bei solchen Flächen kann vorgesehen sein, dass der Verlauf der Übergangskurve im Anfangsabschnitt am Startpunkt eine Tangente (bestimmt durch Ableitung bzw. Differentialquotient oder als Kurvensteigung) aufweist, welche die erste Teilfläche in einem Winkel von ca. 45° +/- 5° schneidet. An dieser Schnittkurve zwischen Querschnittsübergang kann ggf. eine leichte Kante verbleiben oder auch durch Rundung vermieden werden. Weiterhin ist es grundsätzlich vorteilhaft, den Verlauf der Übergangskurve so zu wählen, dass diese im Endabschnitt am Endpunkt, in Bezug auf ihre Kurventangente betrachtet im Wesentlichen parallel, ggf. +/- 5° zur zweiten Teilfläche liegt und idealerweise exakt in dieser liegt, was z.B. mit dem vorstehenden 45°-Kreissegmentbogen mit Z/A=2,5 konstruktiv einfach erreicht wird.

Grundsätzlich liegt der mindestens eine Querschnittsübergang asymmetrisch zur Winkelhalbierenden der ersten und zweiten Fläche, weil relevante Lasten primär bzw. überwiegend einachsig sind.

Besonders Vorteilhaft ist der Querschnittsübergang daher wenn bzw. dort, wo die zweite Teilfläche mit dem Endpunkt der Übergangskurve an einem bestimmungsgemäß zumindest in einem von beiden alternierenden Lastfällen auf Zug belastet wird, d.h. in einem Zugkraft übertragenden Bereich des Laschenkörpers vorgesehen ist.

Der Querschnittsübergang kann durch geeignete Gestaltung von Formwerkzeugen ohne weiteres und ohne besonderen Aufwand auch in sehr hohen Stückzahlen verwirklicht werden wenn dieser einstückig mit dem Laschenkörper aus thermoplastischem Kunststoff, insbesondere im Spritzgussverfahren, hergestellt ist. Er kann so ohne jegliche, z.B. spanende Nachbearbeitung verwirklicht werden.

Die Erfindung betrifft Innenlaschen, Außenlaschen oder gekröpfte Laschen, insbesondere einstückige Kunststofflaschen, welche mindestens einen vorgeschlagenen Querschnittsübergang aufweisen. Demensprechend betrifft die Erfindung auch ein Kettenglied einer Energieführungskette mit zwei solchen Seitenlaschen und eine daraus aufgebaute Energieführungskette in Gesamtheit.

Weitere Merkmale und Vorteile der Erfindung sind ohne Beschränkung des Schutzumfangs der nachfolgenden, ausführlicheren Beschreibung bevorzugter Ausführungsbeispiele anhand der beiliegenden Figuren zu entnehmen. Diese zeigen rein beispielhaft:
FIG.1A-1E: Ansichten einer gekröpften Seitenlasche gemäß einer ersten Ausführungsform in Seitenansicht von der dem Ketteninneren abgewandten Außenseite (FIG.1A), im Längsschnitt gemäß Schnittlinie A-A (FIG.1B), in vergrößertem Teilschnitt D (FIG.1D), perspektivisch (FIG.1C) und in einem vergrößerten Teilquerschnitt (FIG.1E) gemäß Schnittlinie B-B aus FIG.1A;
FIG.2: eine stark vergrößerte Kurvendarstellung der Übergangskurve des Querschnittsübergangs, der z.B. in FIG.1D und FIG.1E dargestellt ist; und
FIG.3: perspektivische Ansichten einer Innenlasche von der Außenseite (FIG.3A) und einer Außenlasche von Innenseite (FIG. 3B).

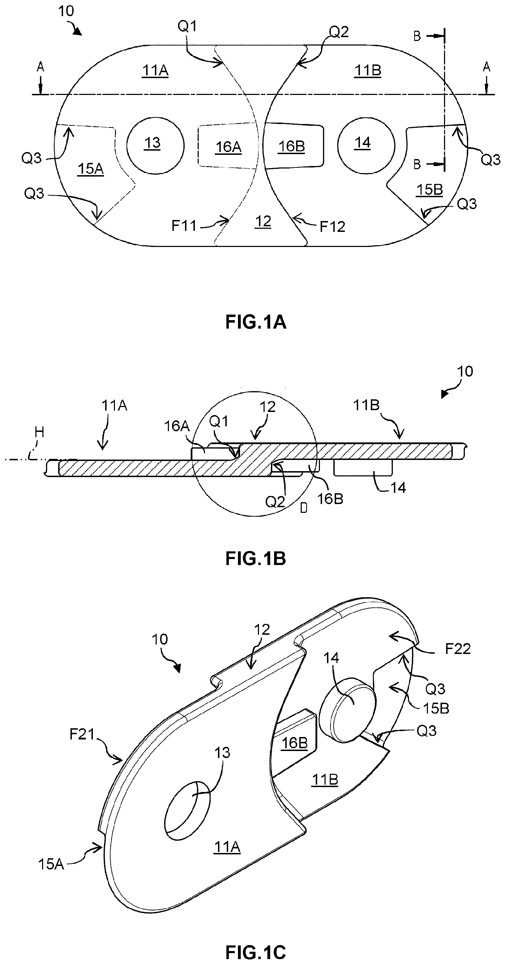

FIG.1A-1E zeigen eine gekröpfte Seitenlasche 10, die als einstückiger Laschenkörper aus Kunststoff im Spritzgussverfahren hergestellt ist. Die Seitenlasche 10 hat zwei flächige, seitlich versetzte Überlappungsbereichen 11A, 11B und einen Mittelbereich 12 auf halber Kettenteilungslänge. Der Mittelbereich 12 hat eine größere Wandstärke im Vergleich zu den Überlappungsbereichen 11A, 11B. Der erste Überlappungsbereich 11A hat eine Gelenkaufnahme 13 zum schwenkbaren Eingriff eines passenden Gelenkzapfen 14 einer zu verbindenden baugleichen Seitenlasche 10. Der Gelenkzapfen 14 steht außenseitig am gegenüberliegenden zweiten Überlappungsbereich 11B vor. An kreisbogenförmigen Endbereichen der Überlappungsbereiche 11A, 11B sind jeweils identische dimensionierte Anschlagtaschen 15A, 15B als Ausnehmungen im Laschenkörper vorgesehen. In jede Anschlagtasche 15A, 15B greift je ein passender Anschlagvorsprung 16A, 16B der jeweils angrenzenden Seitenlasche 10 ein um den relativen Schwenkwinkel um die Schwenkachse des zylindrischen Gelenkzapfens 14 auf die gewünschte Weite zu begrenzen. Dies erfolgt durch Anschlag des Anschlagvorsprungs 16A, 16B in der komplementären Anschlagtasche 15A, 15B. Nicht gezeigt sind z.B. Befestigungsvorsprünge der Seitenlasche 10 für Querstege. Die Seitenlasche 10 kann im Übrigen auch Bestandteil eines einteilig hergestellten Kettenglieds mit einer gegenüberliegenden, zur Seitenlasche 10 gespiegelten und ansonsten baugleichen Seitenlasche sein.

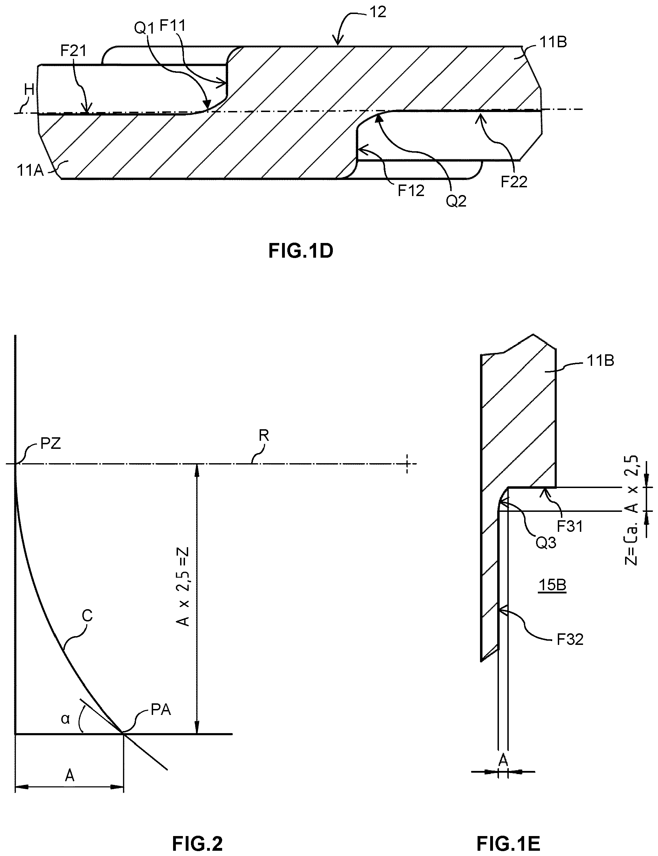

Der Mittelbereich 12 ist in Längsrichtung der Seitenlasche 10 beidseitig begrenzt durch eine etwa kreisbogenförmig um die jeweilige Schwenkachse verlaufende jeweilige Stirnfläche F11, F12, welche senkrecht zur Laschenhauptebene H steht (FIG.1D). Die Innenseite des nach außen gekröpften Überlappungsbereichs 11A bildet eine ebene Fläche F21 und die Außenseite des nach innen gekröpften Überlappungsbereichs 11B eine weitere ebene Fläche F21. Die Flächen F21, F22 liegen parallel und mit Bewegungsspiel leicht seitenversetzt zur Laschenhauptebene H, d.h. die Flächen F21, F22 stehen senkrecht zu den Stirnfläche F11, F12. Die Fläche F21 des ersten Überlappungsbereichs 11A und die eine Stirnfläche F11 des Mittelbereich 12 sind durch einen Querschnittsübergang Q1 verbunden. Die Fläche F22 des zweiten Überlappungsbereichs 11B und die andere Stirnfläche F12 des Mittelbereich 12 sind durch einen Querschnittsübergang Q2 verbunden. Das Querschnittsprofil der Querschnittsübergänge Q1, Q2 ist identisch entsprechend einer Übergangskurve C, die z.B. in FIG.2 näher gezeigt ist, geformt mit einem kürzeren Schenkel zur Stirnfläche F11, F12 und einem längeren Schenkel zu den seitlichen Flächen F21, F22.

FIG.1E zeigt einen weiteren Querschnittsübergang Q3 dessen Profil durch die Übergangskurve C aus FIG.2 definiert ist. Der Querschnittsübergang Q3 überbrückt eine anschlagswirksame Anschlagfläche F31 als Rand der Anschlagtasche 15B im Überlappungsbereich 11B und die Außenfläche F32 einer die Anschlagtasche 15B einseitig, in FIG.1E zum Ketteninneren, schließenden Bodenwand mit relativ geringer Wandstärke bzw. Dicke im Vergleich zum restlichen Überlappungsbereich 11B. Identisch gestaltete Querschnittsübergänge Q3 sind in beiden Anschlagtasche 15A, 15B beidseitig, jeweils an der als Gegenanschlag für den Anschlagvorsprungs 16A, 16B dienenden Anschlagfläche vorgesehen. An jedem Anschlagvorsprung 16A, 16B können optional anstatt gerundeter Kanten zu den Querschnittsübergänge Q3 komplementäre Querschnittsübergänge vorgesehen werden (nicht gezeigt).

Die Querschnittsübergänge Q1, Q2, Q3 gemäß der Übergangskurve C sind hinsichtlich Ermüdungsschäden, insbesondere kraftflussbedingter örtlicher Spannungskonzentrationen bzw. Spannungsspitzen im jeweiligen Bereich des Laschenkörpers der Seitenlasche 10 optimiert, da diese Bereiche stetigen Lastwechseln und/oder hohen Kräften standhalten müssen. Die Querschnittsübergänge Q1, Q2 bzw. Q3 erlauben eine Reduzierung der Materialstärke des Laschenkörpers bzw. eine weitergehende Reduzierung der Bodenwand der Anschlagtaschen 15A, 15B, oder bewirken bei gleichbleibender Materialstärke eine gesteigerte Betriebsfestigkeit (Festigkeit gegen wiederholende Lastwechsel) der angrenzenden Bereiche der Seitenlasche 10.

Die Überlappungsbereiche 11A, 11B und der Mittelbereich 12 weisen außerdem an weitere Bereichen, die hinsichtlich Spannungsspitzen unkritisch sind, Querschnittsübergänge auf, welche als gebrochene Kanten oder konventionell mit einem Radius entsprechend einem Viertelkreis gerundet sind. Konventionelle Radiusrundungen sind hier beispielhaft z.B. für die Übergänge der seitlichen Flächen F21, F22 der Überlappungsbereiche 11A, 11B zu den oberen und unteren Schmalseiten der Seitenlasche 10 (FIG.1C) oder für die Stirnfläche F11, F12 zu den äußeren Seitenflächen der Seitenlasche (FIG.1D) dargestellt.

Eine bevorzugte Übergangskurve C zur Konstruktion der Querschnittsübergänge Q1, Q2 bzw. Q3 ist in FIG.2 dargestellt, wobei die Übergangskurve C auf die Größenverhältnisse jeweils skalierten auszulegen ist. Wie in FIG.2 ersichtlich hat der Startpunkt PA der Übergangskurve C an der einen Teilfläche F11, F21, F31 jeweils einen Abstand A zur Schnittkurve der ersten Teilfläche mit der zweiten Teilfläche F12, F22, F32, hier lotrecht wegen senkrechten Teilflächen, und der Endpunkt PZ der Übergangskurve C an der zweiten Teilfläche F12, F22, F32 einen Abstand Z zur Schnittkurve beider Teilflächen, hier lotrecht zur Teilfläche F11, F21, F31. In FIG.2 beträgt der Abstand Z des Endpunkts PZ ca. Z=2,5 · A und die Übergangskurve C ist ein 45°-Kreisbogensegment, dessen Radius R für einen gewünschten Abstand A so gewählt ist, dass der das Kreisbogensegment bildende Kreis exakt bei Z=2,5 · A tangential die zweite Teilfläche F12, F22, F32 trifft bzw. diese nur im Punkt PZ berührt. So wird zugleich erreicht, dass die Querschnittsfläche des Querschnittsübergangs Q1, Q2 bzw. Q3 entlang der Übergangskurve C vom Startpunkt PA zum Endpunkt PZ stetig abnimmt, hier gemäß einer streng monoton fallenden Kurve. Bevorzugt wird die Übergangskurve C so gewählt, dass 2,3 · A ≤ Z ≤ 3,4 · A eingehalten ist, besonders bevorzugt 2,2 · A ≤ Z ≤ 2,6. Auch andere Funktionen, insbesondere ohne gleichbleibenden Krümmungsradius kommen in Betracht, bspw. eine Tangenskurve (nicht gezeigt) etwa Tangens(x) mit x=0 bis x(PZ) und 1,25 ≤ x(PZ) ≤ 1,4 bzw. so angelegt, dass Z/A≈3,4 und die Kurve bei PA etwa mit 45° die erste Teilfläche F11, F21, F31 schneidet. Letzteres kommt insbesondere für Übergänge senkrechter Flächen in Betracht (wie in FIG.1A-1E). Auch andere trigonometrische Funktionen kommen in Betracht oder z.B. ein Ellipsensegment, sofern die Kurventangent sich entlang des Kurvenverlaufs kontinuierlich, vorzugsweise streng monoton, in Richtung Parallelität zur zweiten Teilfläche F12, F22, F32 dreht.

Zur Optimierung des Kraftflusses günstigen Übergangskurven verlaufen zwischen zwei beidseitigen Äquidistanten bzw. Parallelkurven im Abstand d = 0,1 · A zum 45°-Kreissegment mit Z/A = ca. 2,5. Die Übergangskurve C hat in Grenzwertbetrachtung am Startpunkt PA eine Tangente die die erste Teilfläche F11, F21, F31 etwa in einem Winkel von ca. 45° +/- 5° schneidet, wobei eine Restkante an dieser Stelle zur Konstruktionsvereinfachung als unkritisch belassen werden kann.

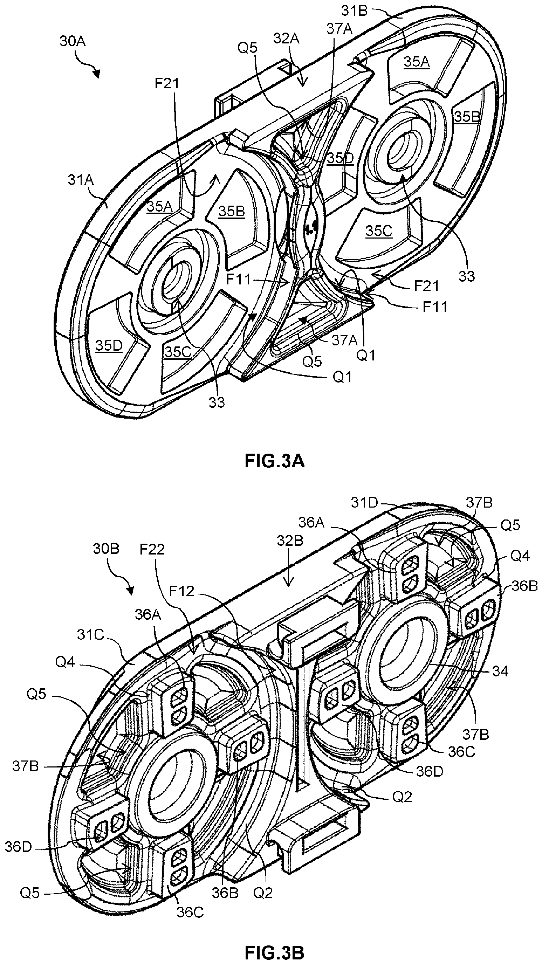

FIG.3A-3B zeigen ein zweites Ausführungsbeispiel mit einer Innenlasche 30A sowie einer Außenlasche 30B. Die Innenlasche 30A ist mit zwei Überlappungsbereichen 31A, 31B und einem Mittelbereich 32A einstückig aus Kunststoff hergestellt. Die Außenlasche 30B ist ebenfalls in einem Spritzgussschritt einstückig mit zwei Überlappungsbereichen 31C, 31D und einem Mittelbereich 32B hergestellt. Die Innenlasche 30A und die Außenlasche 30B sind jeweils zu ihrer Höhenmittelebene symmetrisch und werden anhand der Gelenkaufnahmen 33, hier an der Innenlasche 30A, und der Gelenkzapfen 34 hier an der Außenlasche 30B in alternierender Folge schwenkbar miteinander zu einem Strang verbunden. Die Innenlasche 30A hat außenseitig vier um die Schwenkachse rotationssymmetrisch verteilte und identisch geformte Anschlagtaschen 35A, 35B, 35C, 35D. Zum Eingriff in diese passend hat die Außenlasche 30B innen vier vorstehende Anschlagvorsprünge 36A, 36B, 36C, 36D zwecks Schwenkwinkelbegrenzung.

Analog zum Prinzip aus FIG.1D sind auch nach FIG.3A Stirnflächen F11 des Mittelbereichs 32A der Innenlasche 30A mit Querschnittsübergängen Q1 in zu den Stirnflächen F11 senkrechte seitliche Flächen F21 der Überlappungsbereiche 31A, 31B über. Die Querschnittsübergänge Q1 sind entsprechend skaliert, gemäß der Übergangskurve C aus FIG.2 ausgeführt. Entsprechend analog gehen vom Mittelbereich 32B der Außenlasche 30B (FIG.3B) Stirnflächen F12 mit Querschnittsübergängen Q1 in seitliche Flächen F21 der Überlappungsbereiche 31C, 31D über, um in diesen kritischen Bereichen das Ermüdungsbruchrisiko zu mindern.

Im Gegensatz zu FIG.1A-1E hat zur Reduzierung von Kerbspannungen hier die Außenlasche 30B weitere erfindungsgemäße Querschnittsübergänge Q4 an den Anschlagvorsprünge 36A, 36B, 36C, 36D. Die Querschnittsübergänge Q4 liegen jeweils an der Basis der Anschlagvorsprünge 36A, 36B, 36C, 36D umlaufend und entsprechen einer skalierten Übergangskurve C aus FIG.2. Querschnittsübergänge entsprechend FIG.1E können ggf. auch in den Anschlagtaschen 35A, 35B, 35C, 35D genutzt werden.

Weiterhin zeigen FIG.3A-3B zwei Materialaussparungen 37A außen am Mittelbereich 32A der Innenlasche 30A sowie jeweils vier weitere rotationssymmetrisch angeordnete und identisch gestaltete Materialaussparungen 37B in der Außenlasche 30B. Die Verwendung erfindungsgemäßer Querschnittsübergänge Q5 gemäß einer Übergangskurve C nach FIG.2 für den Übergang nach innen in diese Materialaussparungen 37A, 37B ermöglicht eine bessere Werkstoffausnutzung im Laschenkörper der Innenlasche 30A und der Außenlasche 30B und damit zugleich eine spürbare Reduzierung der Bauteilmasse bzw. benötigter Kunststoffmenge pro Lasche, was Materialkosten senkt und die Taktzeiten der Spritzgussmaschine erhöhen kann.

Hinsichtlich sonstiger an sich bekannter und z.T. hier nicht dargestellter Merkmale einer Energieführungskette wird abschließend zur Verkürzung auf DE 3 531 066 C2 (mit gekröpften Laschen) bzw. auf WO 95/04231 A1 (mit Innen-/ Außenlaschen) verwiesen. Die Begriffe innen und außen sind nachfolgend in Bezug auf den Aufnahmeraum für Leitungen im Kettenglied der Energieführungskette zu verstehen (nicht gezeigt).

### Bezugszeichenliste

**FIG.1A-1E**
   10 Seitenlasche (gekröpft)
   11A, 11B Überlappungsbereiche
   12 Mittelbereich
   13 Gelenkaufnahme
   14 Gelenkzapfen
   15A, 15B Anschlagtasche
   16A, 16B Anschlagvorsprung
   F11, F21, F31 erste Teilfläche
   F12, F22, F32 zweite Teilfläche
   H Laschenhauptebene
   Q1, Q2, Q3 Querschnittsübergang
**FIG.2**
   C Übergangskurve
   PA Startpunkt (Übergangskurve)
   PZ Endpunkt (Übergangskurve)
   R Radius (45°-Kreissegment)
**FIG.3A-3B**
   30A Innenlasche
   30B Außenlasche
   31A, 31B Überlappungsbereiche (Innenlasche)
   31C, 31D Überlappungsbereiche (Außenlasche)
   32A, 32B Mittelbereich
   33 Gelenkaufnahme
   34 Gelenkzapfen
   35A, 35B, 35C, 35D Anschlagtasche
   36A, 36B, 36C, 36D Anschlagvorsprung
   37A, 37B Materialaussparung
   F11, F21 erste Teilfläche
   F12, F22 zweite Teilfläche
   Q1, Q2, Q4, Q5 Querschnittsübergang

## Patentansprüche

1. Seitenlasche (10; 30A, 30B) für eine Energieführungskette zur Führung von Leitungen mittels Kettengliedern, die zwei gegenüberliegende Seitenlaschen umfassen, welche über mindestens einen Quersteg miteinander verbunden sind, wobei die Seitenlasche (10; 30A, 30B) einen einstückigen Laschenkörper aus Kunststoff mit zwei Überlappungsbereichen (11A, 11B; 31A... 31D), jeweils zur schwenkbaren Verbindung mit einem korrespondierenden Überlappungsbereich einer angrenzenden Lasche, und einen Mittelbereich (12; 32A, 32B) zwischen den Überlappungsbereichen aufweist; und
wobei die Überlappungsbereiche und der Mittelbereich eine Anzahl Querschnittsübergänge, jeweils zwischen zwei äußeren Teilflächen aufweisen, von denen mindestens ein Querschnittsübergang zwischen einer ersten Teilfläche (F11, F21, F31) des Laschenkörpers und einer zu dieser in einem Winkel, insbesondere einem Winkel von 90°, verlaufenden zweiten Teilfläche (F12, F22, F32) gerundet oder gebrochen (Q1... Q5) ist; wobei der mindestens eine Querschnittsübergang (Q1... Q5) begrenzt ist durch eine einhüllende Übergangskurve (C) mit einem Verlauf so, dass für einen Startpunkt (PA) der Übergangskurve (C) an der ersten Teilfläche (F11, F21, F31), welcher in einem Abstand A zur Schnittkurve der ersten Teilfläche mit der zweiten Teilfläche liegt, der Endpunkt (PZ) der Übergangskurve (C) an der zweiten Teilfläche (F12, F22, F32) in einem Abstand Z zu dieser Schnittkurve liegt, mit 1,7 · A ≤ Z ≤ 4,0 · A, insbesondere mit 2,3 · A ≤ Z ≤ 3,4 · A, und dass die Querschnittsfläche des Querschnittsübergangs (Q1... Q5) entlang der Übergangskurve (C) vom Startpunkt (PA) zum Endpunkt (PZ) stetig abnimmt.

2. Seitenlasche nach Anspruch 1, **dadurch gekennzeichnet, dass** die Übergangskurve (C) einer glatten bzw. stufenlosen und streng monoton fallenden Kurve entspricht.

3. Seitenlasche nach einem der Ansprüche 1 bis 2, **dadurch gekennzeichnet, dass** die erste Teilfläche (F11, F21, F31) senkrecht zur Hauptebene der Seitenlasche liegt und die zweite Teilfläche parallel (F12, F22, F32) zur Hauptebene (H) des Laschenkörpers liegt.

4. Seitenlasche nach Anspruch 3, **dadurch gekennzeichnet, dass** die erste Teilfläche mit dem Startpunkt (PA) am Mittelbereich (12; 32A, 32B) und die zweite Teilfläche mit dem Endpunkt (PZ) an einem Überlappungsbereich (11A, 11B; 31A... 31D) liegt.

5. Seitenlasche nach Anspruch 3, **dadurch gekennzeichnet, dass** die erste Teilfläche (F31) mit dem Startpunkt (PA) einer anschlagswirksamen Anschlagfläche einer Anschlagausnehmung (15A, 15B) in einem Überlappungsbereich entspricht und die zweite Teilfläche (F32) mit dem Endpunkt (PZ) einer die Anschlagausnehmung (15A, 15B) einseitig schließenden Bodenwand entspricht.

6. Seitenlasche nach Anspruch 3, **dadurch gekennzeichnet, dass** die erste Teilfläche mit dem Startpunkt an einem Schwenkzapfen im Überlappungsbereich und die zweite Teilfläche mit dem Endpunkt an einem Seitenwandbereich liegt, von dem der Schwenkzapfen vorsteht.

7. Seitenlasche nach einem der Ansprüche 1 bis 3, **dadurch gekennzeichnet, dass** die Übergangskurve (C) den Querschnittsübergang (Q5) von einer Außenfläche des Laschenkörpers in eine Materialaussparung (37A, 37B) definiert.

8. Seitenlasche nach einem der vorstehenden Ansprüche, insbesondere Anspruch 2, **dadurch gekennzeichnet, dass** der Verlauf der Übergangskurve (C) so gewählt ist, dass der Endpunkt einem Abstand Z zur Schnittkurve mit 2,2 · A ≤ Z ≤ 2,6 · A liegt, und der Verlauf insbesondere einem 45°-Kreissegment eines Kreises entspricht, der im Endpunkt (PZ) tangential die zweiten Teilfläche (F12, F22, F32) berührt.

9. Seitenlasche nach einem der vorstehenden Ansprüche, **dadurch gekennzeichnet, dass** der Winkel zwischen der ersten äußeren Teilfläche (F11, F21, F31) und der zweiten äußeren Teilfläche (F12, F22, F32) des Laschenkörpers entlang des Querschnittsübergangs gleichbleibend 90° beträgt, und
- dass der Verlauf der Übergangskurve (C) im Anfangsabschnitt am Startpunkt (PA) eine Tangente aufweist, welche mit der ersten Teilfläche (F11, F21, F31) einen Winkel von ca. 45° +/-5° bildet; und/oder
- dass der Verlauf der Übergangskurve im Endabschnitt am Endpunkt (PZ) eine Tangente welche im Wesentlichen parallel zur zweiten Teilfläche bzw. stetig in diese übergeht.

10. Seitenlasche nach einem der vorstehenden Ansprüche, **dadurch gekennzeichnet, dass** der mindestens eine Querschnittsübergang (Q1... Q5) asymmetrisch zur Winkelhalbierenden der ersten und zweiten Fläche ist und/oder einstückig mit dem Laschenkörper aus thermoplastischem Kunststoff, insbesondere im Spritzgussverfahren, hergestellt ist.

11. Seitenlasche nach einem der vorstehenden Ansprüche, **dadurch gekennzeichnet, dass** die zweite Teilfläche (F12, F22, F32) mit dem Endpunkt (PZ) der Übergangskurve (C) an einem bestimmungsgemäß zumindest Zugkraft übertragenden Bereich des Laschenkörpers vorgesehen ist.

12. Seitenlasche nach einem der vorstehenden Ansprüche, **dadurch gekennzeichnet, dass** diese als Innenlasche (30A), als Außenlasche (30B) oder als gekröpfte Lasche (10) ausgeführt ist.

13. Kettenglied einer Energieführungskette mit zwei gegenüberliegenden Seitenlaschen (10; 30A, 30B) nach einem der vorstehenden Ansprüche.

14. Energieführungskette umfassend zwei Laschenstränge, welche jeweils aus miteinander in Längsrichtung schwenkbar verbundenen Seitenlaschen (10; 30A, 30B) nach einem der vorstehenden Ansprüche 1 bis 12 bestehen.

## Claims

1. A side plate (10; 30A, 30B) for an energy guide chain for guiding lines using chain links which comprise two opposing side plates which are connected together via at least one crosspiece, wherein the side plate (10; 30A, 30B) has a one-piece plate body of plastics material with two overlap regions (11A, 11B; 31A-31D), in each case for swivelable connection to a corresponding overlap region of an adjoining plate, and a central region (12; 32A, 32B) between the overlap regions; and wherein the overlap regions and the central region have a number of cross-sectional transitions, in each case between two outer subsurfaces, at least one cross-sectional transition of which between a first subsurface (F11, F21, F31) of the plate body and a second subsurface (F12, F22, F32) extending at an angle, in particular an angle 90°, to said first subsurface, is rounded or chamfered (Q1-Q5); wherein the at least one cross-sectional transition (Q1-Q5) is delimited by an envelope transition curve (C) with a course such that, for a starting point (PA) of the transition curve (C) at the first subsurface (F11, F21, F31), which is located at a distance A from the intersection curve of the first subsurface with second subsurface, the endpoint (PZ) of the transition curve (C) at the second subsurface (F12, F22, F32) is located at a distance Z from said intersection curve, with 1.7 · A ≤ Z ≤ 4.0 · A, in particular with 2.3 · A ≤ Z ≤ 3.4 · A, and such that the cross-sectional area of the cross-sectional transition (Q1-Q5) decreases continuously along the transition curve (C) from the starting point (PA) to the endpoint (PZ).

2. The side plate according to Claim 1, **characterized in that** the transition curve (C) corresponds to a smooth or stepless and strictly monotonically falling curve.

3. The side plate according to one of Claims 1 to 2, **characterized in that** the first subsurface (F11, F21, F31) is located perpendicular to the main plane of the side plate and the second subsurface is located parallel (F12, F22, F32) to the main plane (H) of the plate body.

4. The side plate according to Claim 3, **characterized in that** the first subsurface with the starting point (PA) is located on the central region (12; 32A, 32B) and the second subsurface with the endpoint (PZ) on an overlap region (11A, 11B; 31A-31D).

5. The side plate according to Claim 3, **characterized in that** the first subsurface (F31) with the starting point (PA) corresponds to a stop surface with a limit stop effect of a stop recess (15A, 15B) in an overlap region and the second subsurface (F32) with the endpoint (PZ) corresponds to a bottom wall which closes the stop recess (15A, 15B) on one side.

6. The side plate according to Claim 3, **characterized in that** the first subsurface with the starting point is located on a swivel pin in the overlap region and the second subsurface with the endpoint is located on a sidewall region from which the swivel pin protrudes.

7. The side plate according to one of Claims 1 to 3, **characterized in that** the transition curve (C) defines the cross-sectional transition (Q5) from an outer surface of the plate body into a material recess (37A, 37B).

8. The side plate according to one of the preceding claims, in particular Claim 2, **characterized in that** the course of the transition curve (C) is selected such that the endpoint is located at a distance Z from the intersection curve with 2.2 · A ≤ Z ≤ 2.6 · A, and the course in particular corresponds to a 45° circle segment of a circle which tangentially touches the second subsurface (F12, F22, F32) in the endpoint (PZ).

9. The side plate according to one of the preceding claims, **characterized in that** the angle between the first outer subsurface (F11, F21, F31) and the second outer subsurface (F12, F22, F32) of the plate body amounts to a constant 90° along the cross-sectional transition, and
- **in that** the course of the transition curve (C) in the initial portion at the starting point (PA) has a tangent which forms an angle of approx. 45° ±5° with the first subsurface (F11, F21, F31); and/or
- **in that** the course of the transition curve in the end portion at the endpoint (PZ) has a tangent which is substantially parallel to the second subsurface or continuously merges into it.

10. The side plate according to one of the preceding claims, **characterized in that** the at least one cross-sectional transition (Q1-Q5) is asymmetric to the bisector of the first and second surfaces and/or is produced in one piece with the plate body from a thermoplastic, in particular by the injection molding method.

11. The side plate according to one of the preceding claims, **characterized in that** the second subsurface (F12, F22, F32) with the endpoint (PZ) of the transition curve (C) is provided at a region of the plate body which is intended to transmit at least tensile force.

12. The side plate according to one of the preceding claims, **characterized in that** it takes the form of an inner plate (30A), an outer plate (30B) or an offset plate (10).

13. A chain link of an energy guide chain having two opposing side plates (10; 30A, 30B) according to one of the preceding claims.

14. An energy guide chain comprising two strings of plates which in each case consist of side plates (10; 30A, 30B) according to one of preceding claims 1 to 12 which are joined together swivelably in the longitudinal direction.

## Revendications

1. Maillon latéral (10; 30A, 30B) pour une chaîne de guidage d'énergie destinée à guider des lignes à l'aide de maillons de chaîne qui comprennent deux maillons opposés qui sont reliés l'un à l'autre par l'intermédiaire d'au moins une traverse, dans lequel le maillon latéral (10; 30A, 30B) présente un corps de maillon d'une seule pièce en matière plastique avec deux zones de chevauchement (11A, 11B; 31A-31D), à chaque fois pour une liaison pivotante avec une zone de chevauchement correspondante d'un maillon adjacent, et une zone centrale (12; 32A, 32B) entre les zones de chevauchement; et dans lequel les zones de chevauchement et la zone centrale présentent un certain nombre de transitions de section transversale, dans chaque cas entre deux sous-surfaces extérieures, dont au moins une transition de section entre une première sous-surface (F11, F21, F31) du corps de plaque et une seconde sous-surface (F12, F22, F32) s'étendant selon un angle, en particulier un angle de 90°, par rapport à ladite première sous-surface, est arrondie ou chanfreinée (Q1-Q5); dans lequel ladite au moins une transition de section (Q1-Q5) est délimitée par une courbe de transition d'enveloppe (C) avec un cours tel que, pour un point de départ (PA) de la courbe de transition (C) au niveau de la première sous-surface (F11, F21, F31), qui est situé à une distance A de la courbe d'intersection de la première sous-surface avec la deuxième sous-surface, le point final (PZ) de la courbe de transition (C) au niveau de la deuxième sous-surface (F12, F22, F32) est situé à une distance Z de ladite courbe d'intersection, avec 1,7 · A ≤ Z ≤ 4,0 · A, en particulier avec 2,3 · A ≤ Z ≤ 3,4 · A, et de telle sorte que la surface de section de la transition de section (Q1-Q5) diminue de manière continue le long de la courbe de transition (C) depuis le point de départ (PA) jusqu'au point final (PZ).

2. Maillon latéral selon la revendication 1, **caractérisé en ce que** la courbe de transition (C) correspond à une courbe douce ou en continu et descendant strictement monotone.

3. Maillon latéral selon l'une des revendications 1 à 2, **caractérisé en ce que** la première sous-surface (F11, F21, F31) est située perpendiculairement au plan principal de la plaque latérale et la deuxième sous-surface est située parallèlement (F12, F22, F32) au plan principal (H) du corps de plaque.

4. Maillon latéral selon la revendication 3, **caractérisé en ce que** la première sous-surface avec le point de départ (PA) est située sur la zone centrale (12; 32A, 32B) et la deuxième sous-surface avec le point final (PZ) sur une zone de chevauchement (11A, 11B; 31A-31D).

5. Maillon latéral selon la revendication 3, **caractérisé en ce que** la première sous-surface (F31) avec le point de départ (PA) correspond à une surface de butée avec un effet de butée d'un évidement de butée (15A, 15B) dans une zone de chevauchement et la deuxième sous-surface (F32) avec le point final (PZ) correspond à une paroi de fond qui ferme l'évidement de butée (15A, 15B) d'un côté.

6. Maillon latéral selon la revendication 3, **caractérisé en ce que** la première sous-surface avec le point de départ est située sur un axe de pivotement dans la zone de chevauchement et la deuxième sous-surface avec le point d'extrémité est située sur une zone de paroi latérale de laquelle l'axe de pivotement fait saillie.

7. Maillon latéral selon l'une des revendications 1 à 3, **caractérisé en ce que** la courbe de transition (C) définit la transition de section (Q5) d'une surface extérieure du corps de plaque dans un évidement de matériau (37A, 37B).

8. Maillon latéral selon l'une des revendications précédentes, notamment la revendication 2, **caractérisé en ce que** le cours de la courbe de transition (C) est choisi de telle sorte que le point final se situe à une distance Z de la courbe d'intersection avec 2,2 · A ≤ Z ≤ 2,6 · A, et le cours correspond notamment à un segment de cercle à 45° d'un cercle qui touche tangentiellement la deuxième sous-surface (F12, F22, F32) dans le point final (PZ).

9. Maillon latéral selon l'une des revendications précédentes, **caractérisé en ce que** l'angle entre la première sous-surface extérieure (F11, F21, F31) et la deuxième sous-surface extérieure (F12, F22, F32) du corps de plaque est égal à une valeur constante de 90° le long de la transition de section, et
- **en ce que** le cours de la courbe de transition (C) dans la partie initiale au point de départ (PA) a une tangente qui forme un angle d'environ 45° ±5° avec la première sous-surface (F11, F21, F31); et/ou
- **en ce que** le cours de la courbe de transition dans la partie finale au point final (PZ) a une tangente qui est sensiblement parallèle à la deuxième sous-surface ou qui s'y fond de manière continue.

10. Maillon latéral selon l'une des revendications précédentes, **caractérisé en ce que** ladite au moins une transition de section (Q1-Q5) est asymétrique par rapport à la bissectrice de la première et de la deuxième surface et/ou est fabriquée d'un seul tenant avec le corps de plaque à partir d'une matière thermoplastique, en particulier par le procédé de moulage par injection.

11. Maillon latéral selon l'une des revendications précédentes, **caractérisé en ce que** la deuxième sous-surface (F12, F22, F32) avec le point final (PZ) de la courbe de transition (C) est prévue dans une zone du corps de plaque qui est destinée à transmettre au moins une force de traction.

12. Maillon latéral selon l'une des revendications précédentes, **caractérisé en ce qu'**il se présente sous la forme d'un maillon intérieur (30A), d'un maillon extérieur (30B) ou d'un maillon décalé (10).

13. Maillon de chaîne d'une chaîne de guidage d'énergie comportant deux maillons latéraux opposés (10; 30A, 30B) selon l'une des revendications précédentes.

14. Chaîne de guidage d'énergie comprenant deux chaînes de maillons qui se composent chacun de maillons latéraux (10; 30A, 30B) selon l'une des revendications précédentes 1 à 12, qui sont reliés entre eux de manière à pouvoir pivoter dans la direction longitudinale.
